# EUROPÄISCHE PATENTSCHRIFT

(11) **EP 4 078 050 B1**
(45) Veröffentlichungstag und Bekanntmachung des Hinweises auf die Patenterteilung: **06.11.2024**
(21) Anmeldenummer: 20785472.0
(22) Anmeldetag: 28.09.2020
(51) Int. Cl.: B60H 1/00, B60H 1/32, F25B 5/02, F25B 13/00, F25B 25/00, F25B 30/00, F25B 40/00, F25B 41/20, F25B 41/40, F25B 49/02

(54) **KÄLTEMITTELMANAGEMENT FÜR EIN NACHHEIZVERFAHREN ZUM BETREIBEN EINER KÄLTEANLAGE FÜR EIN KRAFTFAHRZEUG, KÄLTEANLAGE UND KRAFTFAHRZEUG MIT EINER SOLCHEN KÄLTEANLAGE**
COOLANT MANAGEMENT FOR A REHEATING PROCESS FOR OPERATING A COOLING SYSTEM FOR A MOTOR VEHICLE, COOLING SYSTEM, AND MOTOR VEHICLE HAVING SUCH A COOLING SYSTEM
CONTRÔLE DE REFROIDISSEMENT POUR UN PROCESSUS DE RÉCHAUFFAGE DESTINÉ À COMMANDER UN SYSTÈME DE REFROIDISSEMENT POUR UN VÉHICULE À MOTEUR, SYSTÈME DE REFROIDISSEMENT, ET VÉHICULE À MOTEUR AYANT UN TEL SYSTÈME DE REFROIDISSEMENT

(30) Priorität: 19.12.2019 DE 102019135056
(43) Veröffentlichungstag der Anmeldung: 26.10.2022
(73) Patentinhaber: Audi AG, 85045 Ingolstadt (DE)
(72) Erfinder: SCHROEDER, Dirk, 85077 Manching (DE); REBINGER, Christian, 80807 München (DE); WILL, Marco, 85057 Ingolstadt (DE); BOGNER, Simon, 92342 Freystadt (DE)
(86) Internationale Anmeldenummer: PCT/EP2020/077053
(87) Internationale Veröffentlichungsnummer: WO 2021/121697

(56) Entgegenhaltungen:
- DE-A1- 102016 005 782
- DE-A1- 102018 207 049
- FR-A1- 3 073 175
- US-A1- 2017 182 860
- US-B2- 10 391 836
- US-B2- 9 796 237

## Beschreibung

Die Erfindung betrifft ein Nachheizverfahren (RHIII) zum Betreiben einer Kälteanlage mit Wärmepumpenfunktion für ein Kraftfahrzeug, eine Kälteanlage und ein Kraftfahrzeug mit einer solchen Kälteanlage. Insbesondere umfasst das Nachheizverfahren Schritte, die dazu eingerichtet sind, das Kältemittelmanagement im Rahmen bestimmter Betriebsbedingungen der Kälteanlage zu optimieren.

Eine Kälteanlage mit Wärmepumpenfunktion umfasst üblicherweise einen Kältemittelverdichter, der mit einem Primärstrang und einem Sekundärstrang verbindbar oder verbunden ist; einen äußeren Wärmeübertrager, der im Primärstrang angeordnet ist; einen Verdampfer, der im Primärstrang angeordnet ist; ein Heizregister, das im Sekundärstrang angeordnet ist; wenigstens eine bewegliche Temperaturklappe, die bezogen auf eine Zuluftströmungsrichtung vor oder nach dem Heizregister angeordnet ist; und wenigstens ein Nachheiz-Expansionsventil, das zwischen dem Heizregister und dem äußeren Wärmeübertrager im Sekundärstrang angeordnet ist.

Eine derartige Kälteanlage mit Wärmepumpenfunktion ist beispielsweise in der DE 10 2018 207 049 A1 oder der DE 10 2018 213 232.1 beschrieben, die zum Zeitpunkt der Einreichung der vorliegenden Anmeldung noch nicht veröffentlicht war.

Weitere Hintergrundinformationen zu Kälteanlagen bzw. Wärmepumpen finden sich beispielsweise in den Druckschriften DE 10 2016 005 782 A1, US 10 391 836 B2, US 2017/182860 A1, FR 3 073 175 A1, DE 10 2015 210 414 A1, DE 10 2011 118 162A1und DE 10 2015 002 166 A1.

Bei einem Nachheizverfahren, das im Fachjargon auch als Reheat, Reheat-Betrieb, Reheat-Verfahren bezeichnet wird, wird bei der Klimatisierung eines Fahrzeuginnenraums die durch den Verdampfer gekühlte und entfeuchtete Luft durch wenigstens teilweise Erwärmung mittels des Heizregisters auf eine gewünschte Ausblastemperatur gebracht.

Das Heizregister ist dabei eine Wärmequelle, bei der im Kältemittel gespeicherte Wärme an ein anderes Medium, wie Luft, Wasser, Wasser-Glykol-Gemisch und dergleichen abgegeben wird. Das Heizregister kann als Heizkondensator bzw. Heizgaskühler ausgeführt sein, wenn es direkt von (Umgebungs-)Luft als Kabinenzuluft durch- bzw. umströmt wird, welche die abgegebene Wärme aufnimmt. Das Heizregister kann als Fluid-Wärmeübertrager ausgeführt sein, wenn es von einem anderen Fluid als (Umgebungs-)Luft, wie beispielsweise Wasser, Wasser-Glykol-Gemisch oder dergleichen durch- bzw. umströmt wird, wobei die im Kältemittel gespeicherte Wärme an das Fluid abgegeben wird. Bei der Ausgestaltung als Fluid-Wärmeübertrager erfolgt dann ein weiterer Wärmeaustausch vom erwärmten Fluid auf die (Umgebungs-)Luft. Insoweit erfolgt durch einen Fluid-Wärmeübertrager eine indirekte Erwärmung von (Umgebungs-)Luft.

Bei einem Nachheiz- bzw. Reheatbetrieb kann über eine Regelung des Nachheiz-Expansionsventils die gewünschte Leistung zur Heizung eines Fahrzeuginnenraums eingestellt werden. Ein möglicher Kennwert für die Wärmeabgabe bzw. die Heizleistung kann dabei eine Ausblastemperatur von konditionierter Luft in den Fahrzeuginnenraum sein.

Wird ein Wärme- bzw. Heizleistungsüberschuss ermittelt, wobei beispielsweise die Ist-Ausblastemperatur größer ist als eine Soll-Ausblastemperatur, kann das Nachheizexpansionsventil insbesondere schrittweise geöffnet werden. Hierdurch sinkt beim Heizregister der Hochdruck und es stellt sich am äußeren Wärmeübertrager ein (steigender) Mittel- bzw. Zwischendruck ein.

Entsprechend steigt die Kondensationstemperatur und der Temperaturunterschied zur Umgebung erhöht sich, so dass über den äußeren Wärmeübertrager mehr Wärme an die Umgebung abgegeben wird.

Wird ein Wärme- bzw. Heizleistungsdefizit ermittelt, wobei beispielsweise die Ist-Ausblastemperatur kleiner als die Soll-Ausblastemperatur ist, kann das Nachheiz-Expansionsventil insbesondere schrittweise geschlossen werden. Hierdurch steigt beim Heizregister der Hochdruck und beim äußeren Wärmeübertrager sinkt der Mittel- bzw. Zwischendruck. Entsprechend sinkt die Kondensationstemperatur und der Temperaturunterschied zur Umgebung verringert sich, so dass über den äußeren Wärmeübertrager weniger Wärme an die Umgebung abgegeben wird.

Es hat sich gezeigt, dass sich bei geringen Wärme- bzw. Heizleistungsüberschüssen folgende Situation in der Kälteanlage ergeben kann. Im äußeren Wärmeübertrager liegt das Kältemittel nahezu vollständig in flüssiger Form vor. Entsprechend kann es auf der Niederdruckseite der Kälteanlage, also stromabwärts des Verdampfers, zu einem Kältemittelmangel kommen, was zu einem überhitzten Austritt von Kältemittel aus dem Verdampfer führt.

Eine solche Überhitzung kann sich beispielsweise auf die luftseitige Temperatur am Verdampfer auswirken, so dass hierdurch der Innenraumkomfort im Fahrzeug negativ beeinflusst wird. Mit anderen Worten ergeben sich hohe Temperaturspreizungen im Abluftstrom des Verdampfers, was zu den Komforteinbußen aufgrund Temperaturinhomogenität aber auch schlechterer Entfeuchtungsleistung führt.

Ferner kann es je nach Ausgestaltung der Kälteanlage auch zu Öleinlagerungen im Kältemittelspeicher kommen. Aufgrund des Fehlens oder einer starken Reduktion einer flüssigen Phase von Kältemittel im Kältemittelspeicher kann das Öl im Kältemittelspeicher zurückbleiben und wird nicht mehr dem Verdichter zugeführt, was zu Schmierungsproblemen am Verdichter führen kann.

Die der Erfindung zu Grunde liegende Aufgabe wird darin gesehen, ein Nachheizverfahren anzugeben, bei dem die obigen Nachteile vermieden werden können.

Diese Aufgabe wird gelöst durch ein Nachheizverfahren mit den Merkmalen des Patentanspruchs 1, durch eine Kälteanlage mit den Merkmalen des Patentanspruchs 7 und durch ein Kraftfahrzeug mit den Merkmalen des Anspruch 11. Vorteilhafte Ausgestaltungen mit zweckmäßigen Weiterbildungen sind in den abhängigen Patentansprüchen angegeben.

Vorgeschlagen wird also ein Nachheizverfahren zum Betreiben einer Kälteanlage mit Wärmepumpenfunktion für ein Kraftfahrzeug, wobei die Kälteanlage umfasst:
einen Kältemittelverdichter, der mit einem Primärstrang und einem Sekundärstrang verbindbar oder verbunden ist;
einen äußeren Wärmeübertrager, der im Primärstrang angeordnet ist;
einen Verdampfer, der im Primärstrang angeordnet ist;
ein Heizregister, das im Sekundärstrang angeordnet ist;
wenigstens ein Nachheiz-Expansionsventil, das zwischen dem Heizregister und dem äußeren Wärmeübertrager im Sekundärstrang angeordnet ist. Dabei umfasst das Nachheizverfahren folgende Schritte:
   Bestimmen eines Wärmedifferenzwerts durch Vergleichen eines Wärmeabgabe-Istwerts am Heizregister mit einem Wärmeabgabe-Sollwert, Anpassen von wenigstens einer Betriebseinstellung der Kälteanlage, so dass die Lastaufnahme in der Kälteanlage erhöht wird, wenn der Wärmedifferenzwert größer als 0 und kleiner als ein Wärmedifferenzschwellwert ist.

Dabei können der Wärmeabgabe-Istwert und der Wärmeabgabe-Sollwert beispielsweise anhand von gemessener bzw. vorgegebener Ausblastemperatur von konditionierter Zuluft in den Fahrzeuginnenraum festgelegt sein. Der Wärmeabgabe-Istwert und der Wärmeabgabe-Sollwert können aber auch anhand anderer messbarer Größen bzw. Parameter der Kälteanlage bestimmt werden bzw. sein. Insbesondere können sie auch aus einer Kombination von zur Verfügung stehenden Kälteanlagen- bzw. Klimatisierungsparametern bestimmt werden bzw. sein.

Der Wärmedifferenzschwellwert kann dabei so festgelegt sein, dass er einen geringen Wärme- bzw. Heizleistungsüberschuss repräsentiert. Geht man beispielsweise davon aus, dass der Wärmedifferenzwert ausgehend von einer Ist-Ausblastemperatur und einer Soll-Ausblastemperatur berechnet wird, kann der Wärmedifferenzschwellwert beispielsweise bei 5 oder kleiner angesetzt werden, aber größer als 0 sein.

Bei dem Nachheizverfahren umfasst das Anpassen der Betriebseinstellung: Messen der Temperatur der Zuluft nach dem Durchströmen des Verdampfers und Absenken einer Solltemperatur für die Temperatur der Zuluft nach dem Durchströmen des Verdampfers.

Das Einstellen der Solltemperatur der Luft nach dem Verdampfer wird auch als Variation des Setpoints der Lufttemperatur nach dem Verdampfer bezeichnet. Wird die zu erreichende Solltemperatur der Luft nach dem Verdampfer reduziert, wird stärker gekühlte Luft bereitgestellt, und die Leistungsaufnahme im Gesamtsystem der Kälteanlage wird erhöht.

Das Absenken der Solltemperatur kann bis zum Erreichen einer minimalen Solltemperatur durchgeführt werden, insbesondere kann diese Maßnahme wiederholt oder/und schrittweise durchgeführt werden. Dabei kann die Solltemperatur beispielsweise auf einen zulässigen Wert von minimal 2 bis 4°C eingestellt werden, um eine Vereisung des Verdampfers durch auskondensierendes Wasser aus dem Verdampferzuluftstrom zu verhindern.

Bei dem Nachheizverfahren kann das Anpassen der Betriebseinstellung alternativ oder ergänzend umfassen: Einstellen der Kondition oder Güte der zum Verdampfer zugeführten Zuluft, wobei der Umluftanteil in der Zuluft erhöht wird. Wird dem Verdampfer wärmere Zuluft zugeführt, was durch das Beimischen von bereits erwärmter Umluft aus dem Fahrzeuginneren erfolgen kann, muss der Verdampfer eine höhere Kühlleistung erbringen, was zu einer gesteigerten Leistungsaufnahme im Gesamtsystem der Kälteanlage führt.

Bei dem Nachheizverfahren kann das Anpassen der Betriebseinstellung alternativ oder ergänzend umfassen: Einbinden von wenigstens einer weiteren, strömungstechnisch parallel oder in Reihe zum Verdampfer angeordneten Komponente der Kälteanlage, insbesondere eines als Wasserwärmepumpeverdampfer arbeitenden Chillers oder/und eines Heckverdampfers für die Klimatisierung eines hinteren Fahrzeugbereichs. Der Chiller dient dabei üblicherweise der Kühlung einer elektrischen Komponente des Fahrzeugs, wie etwa einer Batterie. Der Heckverdampfer kann in einem Fahrzeug vorhanden sein, aber beispielsweise aufgrund der Anzahl Fahrzeuginsassen deaktiviert sein, weil der hintere Fahrzeugbereich (Fond) nicht speziell klimatisiert werden soll. Um die Lastaufnahme insgesamt zu steigern, kann einer solcher Heckverdampfer mit eingebunden werden.

Bei dem Nachheizverfahren kann das Anpassen der Betriebseinstellung alternativ oder ergänzend umfassen: Erhöhen der Luftmenge, die durch das Heizregister geführt wird.

Bei dem Nachheizverfahren kann das Anpassen der Betriebseinstellung alternativ oder ergänzend umfassen: Verringern des Zuluftstroms über den äußeren Wärmeübertrager.

Durch die Einstellung der Menge an zugeführter Zuluft am Heizregister oder/und am äußeren Wärmeübertrager, kann die Leistungsaufnahme des Gesamtsystems der Kälteanlage in gewünschter Weise beeinflusst werden.

Die oben erwähnten Anpassungen der Betriebseinstellung dienen jeweils alleine oder in beliebigen Kombinationen miteinander dazu, die Leistungsaufnahme des Gesamtsystems zu erhöhen. Hierdurch steigt die am äußeren Wärmeübertrager abzuführende Leistung. Insbesondere liegt am Eintritt des äußeren Wärmeübertragers das Kältemittel zu einem größeren Anteil gasförmig vor. Entsprechend führt dies dazu, dass an dem Verdampfer ausreichend Kältemittel zur Verfügung steht, so dass damit aber auch in den systemseitig vorgesehenen Kältemittelspeichern ausreichend Kältemittel vorliegt.

Es wird ferner eine Kälteanlage mit Wärmepumpenfunktion für ein Kraftfahrzeug vorgeschlagen,
mit einem Kältemittelverdichter, der mit einem Primärstrang und einem Sekundärstrang verbindbar oder verbunden ist;
einem äußeren Wärmeübertrager, der im Primärstrang angeordnet ist;
einem Verdampfer, der im Primärstrang angeordnet ist;
einem Heizregister, das im Sekundärstrang angeordnet ist;
wenigstens einem Nachheiz-Expansionsventil, das zwischen dem Heizregister und dem äußeren Wärmeübertrager im Sekundärstrang angeordnet ist;
und einem Steuergerät, das dazu eingerichtet ist, die Kälteanlage mit einem Nachheizverfahren nach einem der vorhergehenden Ansprüche zu betreiben,
wobei in einem solchen Nachheizbetrieb das Kältemittel ausgehend vom Kältemittelverdichter nacheinander die folgenden Komponenten der Kälteanlage durchströmt: Heizregister und Nachheiz-Expansionsventil im Sekundärstrang, äußerer Wärmeübertrager und Verdampfer im Primärstrang.

Die Kälteanlage kann einen strömungstechnisch parallel zum Verdampfer angeordneten Chiller oder/und einen strömungstechnisch parallel zum Verdampfer angeordneten Heckverdampfer umfassen. Alternativ können diese zusätzlichen Verdampfer jedoch auch in einer Reihenverschaltung bezogen auf den Hauptverdampfer angeordnet sein.

Die Kälteanlage kann mit wenigstens einer beweglichen Temperaturklappe ausgeführt sein, die bezogen auf eine Zuluftströmungsrichtung vor oder nach dem Heizregister angeordnet ist.

Die Kälteanlage kann wenigstens eine bewegliche Zuluftklappe aufweisen, die bezogen auf eine Zuluftströmungsrichtung vor dem Verdampfer angeordnet ist.

Die Temperaturklappe(n) oder/und die Zuluftklappe(n) kann bzw. können Teil eines Klimageräts sein, in dem die für die Konditionierung des Zuluftstroms zur Kabine wirkenden Wärmeübertrager aufgenommen sind.

Ein Kraftfahrzeug kann mit einer oben beschriebenen Kälteanlage ausgestattet sein. Dabei kann es sich bei dem Kraftfahrzeug insbesondere um ein Elektrofahrzeug handeln. Bei einem Elektrofahrzeug kann der effiziente Betrieb der Kälteanlage zu Stromeinsparungen führen, so dass hierdurch eine größere Reichweite des Elektrofahrzeugs erzielt werden kann. Insbesondere kann durch die oben beschriebenen Maßnahmen das Einsatzfenster eines Nachheizbetriebs, insbesondere eines Wärmepumpen-Reheat-Betriebs, vergrößert werden, so dass ein solcher Nachheizbetrieb häufiger eingesetzt werden kann. Hierdurch ergibt sich eine verringerte durchschnittliche elektrische Leistungsaufnahme, weil üblicherweise erst viel später oder gegebenenfalls auch gar nicht ein elektrischer Zuheizer eingeschaltet werden muss.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: ein schematisches und vereinfachtes Schaltbild einer Kälteanlage für ein Kraftfahrzeug;
- Fig. 2: ein vereinfachtes log(p)-h-Diagramm zur Veranschaulichung des Kreisprozesses im Nachheizbetrieb.
- Fig. 3: ein Flussdiagram einer beispielhaften Umsetzung des Nachheizverfahrens, insbesondere mittels der in Fig. 1 beschriebenen Kälteanlage.

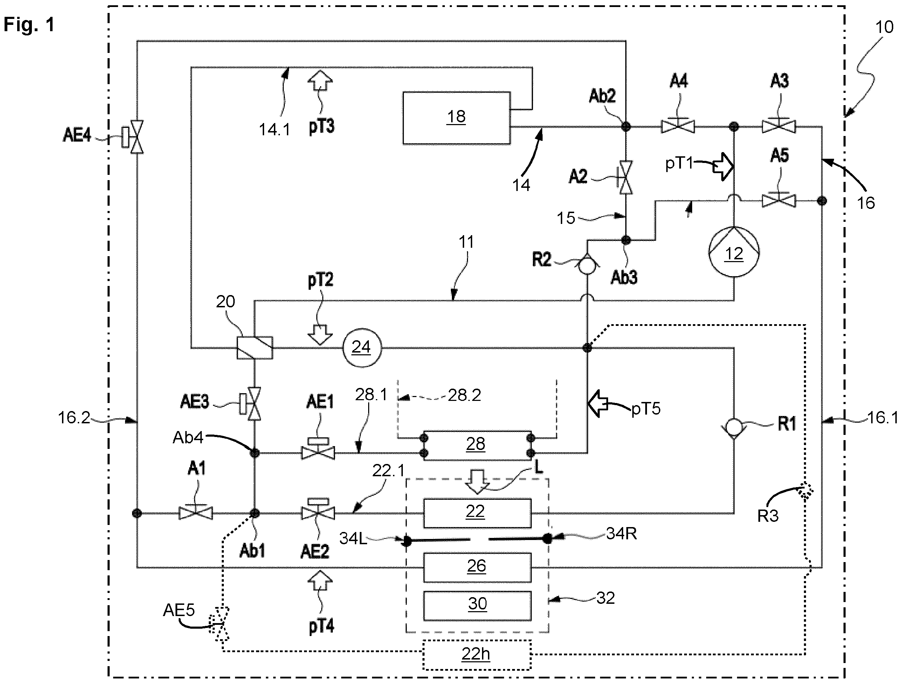

In Fig. 1 ist eine Ausführungsform einer Kälteanlage 10 für ein Kraftfahrzeug schematisch und vereinfacht dargestellt. Die Kälteanlage 10 umfasst einen Kältemittelkreislauf 11, der sowohl in einem Kälteanlagenbetrieb (kurz auch AC-Betrieb genannt), als auch in einem Wärmepumpenmodus betrieben werden kann. Die Kälteanlage 10 umfasst in der gezeigten Ausführungsform einen Kältemittelverdichter 12, einen äußeren Wärmeübertrager 18, einen inneren Wärmeübertrager 20, einen Verdampfer 22 und einen Akkumulator bzw. Kältemittelsammler 24. Der äußere Wärmeübertrager 18 kann als Kondensator oder Gaskühler ausgebildet sein. Insbesondere ist der äußere Wärmeübertrager 18 in der dargestellten Ausführungsform bidirektional durchströmbar.

Der Verdampfer 22 ist hier beispielhaft als Frontverdampfer für ein Fahrzeug gezeigt. Der Verdampfer 22 steht stellvertretend auch für weitere in einem Fahrzeug mögliche Verdampfer, wie beispielsweise Fondverdampfer, die strömungstechnisch parallel zueinander angeordnet sein können. Mit anderen Worten umfasst die Kälteanlage 10 also wenigstens einen Verdampfer 22.

Stromabwärts des Verdichters 12 ist ein Absperrventil A4 angeordnet. Stromaufwärts des Verdampfers 22 ist ein Expansionsventil AE2 vorgesehen.

Im Rahmen dieser Beschreibung wird in dem gesamten Kältemittelkreislauf 11 der Kälteanlage 10 der Abschnitt vom Verdichter 12 zum äußeren Wärmeübertrager 18, zum inneren Wärmeübertrager 20 und zum Verdampfer 22 als Primärstrang 14 bezeichnet.

Die Kälteanlage 10 umfasst weiter ein Heizregister 26 (auch als Heizkondensator oder Heizgaskühler bezeichnet). Stromaufwärts des Heizregisters 26 ist ein Absperrventil A3 angeordnet. Stromabwärts des Heizregisters 26 ist ein Absperrventil A1 angeordnet. Ferner ist stromabwärts des Heizregisters 26 ein Expansionsventil AE4 angeordnet.

Im Rahmen dieser Beschreibung wird in dem gesamten Kältemittelkreislauf der Kälteanlage 10 der Abschnitt vom Verdichter 12 zum Heizregister 26, zum Expansionsventil AE4 und zu einem Abzweig Ab2 als Sekundärstrang 16 bezeichnet. Der Sekundärstrang 16 umfasst einen Heizzweig 16.1, der sich von dem Absperrventil A3 über das Heizregister 26 zum Absperrventil A1 erstreckt. Weiter umfasst der Sekundärstrang 16 einen Nachheizzweig bzw. Reheat-Zweig 16.2, der stromaufwärts mit dem Heizregister 26 und stromabwärts mit dem äußeren Wärmeübertrager 5 fluidverbindbar ist. Dabei mündet der Sekundärstrang 16 bzw. der Reheat-Zweig 16.2 bei einem Abzweigpunkt Ab2 in den Primärstrang 14.

Die Kälteanlage 10 umfasst einen weiteren Verdampfer bzw. Chiller 28. Der Chiller 28 ist strömungstechnisch parallel zum Verdampfer 22 vorgesehen. Der Chiller 28 kann beispielsweise zur Kühlung einer elektrischen Komponente des Fahrzeugs dienen, aber auch zur Realisierung einer Wasser-Wärmepumpenfunktion unter Nutzung der Abwärme von wenigstens einer elektrischen Komponente. Dem Chiller 28 ist stromaufwärts ein Expansionsventil AE1 vorgeschaltet.

Die Kälteanlage 10 kann auch ein elektrisches Heizelement 30 aufweisen, das beispielsweise als Hochvolt-PTC-Heizelement ausgeführt ist. Das elektrische Heizelement 30 dient als Zusatzheizer für einen in den Fahrzeuginnenraum geführten Zuluftstrom L. Dabei kann das elektrische Heizelement 30 zusammen mit dem Heizregister 26 und dem Verdampfer 22 in einem Klimagerät 32 untergebracht sein. Dabei kann das elektrische Heizelement 30 dem Heizregister 26 nachgeschaltet angeordnet sein.

In der Fig. 1 sind ferner noch Rückschlagventile R1 und R2 ersichtlich. Ferner sind auch einige Sensoren pT1 bis pT5 zur Erfassung von Druck oder/und Temperatur des Kältemittels dargestellt. Es wird darauf hingewiesen, dass die Anzahl der Sensoren bzw. deren Anordnung hier nur beispielhaft gezeigt ist. Eine Kälteanlage 10 kann auch weniger oder mehr Sensoren aufweisen. Im gezeigten Beispiel sind als Sensoren kombinierte Druck/Temperatursensoren pT1 bis pT5 gezeigt. Es ist aber genauso denkbar, dass voneinander getrennte Sensoren für die Messung von Druck bzw. Temperatur eingesetzt werden und ggf. auch räumlich voneinander getrennt entlang den Kältemittelleitungen angeordnet sind.

Die Kälteanlage 10 kann in unterschiedlichen Modi betrieben werden, die nachfolgend kurz beschrieben werden.

Im AC-Betrieb des Kältemittelkreislaufs 11 strömt das auf Hochdruck verdichtete Kältemittel ausgehend von dem Kältemittelverdichter 12 bei offenem Absperrventil A4 in den äußeren Wärmeübertrager 18. Von dort strömt es zu dem Hochdruckabschnitt des inneren Wärmeübertragers 20 und dem vollständig geöffneten Expansionsventil AE3. Über einen Abzweigpunkt Ab1 kann das Kältemittel zum Expansionsventil AE2 und in den Innenraum-Verdampfer 22 strömen (Verdampferabschnitt 22.1). Parallel oder alternativ kann das Kältemittel über einen Abzweigpunkt Ab4 und das Expansionsventil AE1 in den Chiller 28 strömen (Chillerabschnitt 28.1). Aus dem Verdampfer 22 oder/und dem Chiller 28 strömt das Kältemittel niederdruckseitig in den Sammler 24 und durch den Niederdruckabschnitt des inneren Wärmeübertragers 20 zurück zum Verdichter 12.

In dem AC-Betrieb ist der Heizzweig 16.1 bzw. der Sekundärstrang 16 mittels des Absperrventils A3 abgesperrt, so dass heißes Kältemittel nicht durch das Heizregister 26 strömen kann. Zur Rückholung von Kältemittel aus dem inaktiven Heizzweig 16.1 kann das als Absperrventil ausgebildete Absperrorgan A5 geöffnet werden, so dass das Kältemittel über das Absperrorgan A5 und das Rückschlagventil R2, bei gleichzeitig geschlossenem Absperrorgan A2, in Richtung des Sammlers 24 strömen kann.

Im Heizbetrieb des Kältemittelkreislaufs 11 wird das Absperrventil A4 geschlossen und das Absperrventil A3 geöffnet, so dass heißes Kältemittel in den Heizzweig 16.1 strömen kann.

Zur Durchführung der Heizfunktion mittels des Chillers 28 zur Realisierung eines Wasser-Wärmepumpen-Betriebs strömt das mittels des Kältemittelverdichters 12 verdichtete Kältemittel über das geöffnete Absperrventil A3 in das Heizregister 26 . Am Heizregister 26 wird Wärme an einen in den Fahrzeuginnenraum geführten Zuluftstrom L abgegeben. Das Kältemittel strömt anschließend über das geöffnete Absperrventil A1 und den Abzweigpunkt Ab1.

Es wird mittels des Expansionsventils AE1 in den Chiller 28 zur Aufnahme von Abwärme der in einem Kühlmittelkreislauf 28.2 angeordneten elektrischen und/oder elektronischen Komponenten entspannt. Bei dieser Heizfunktion sind die Expansionsventile AE3 und AE4 geschlossen, das Absperrventil A5 geschlossen und das Absperrventil A2 geöffnet. Dabei kann über das Absperrventil A2 im Wasser-Wärmepumpenbetrieb ausgelagertes Kältemittel aus einem Bidirektionalzweig 14.1 bzw. dem Primärstrang 14 abgesaugt und über das Rückschlagventil R2 dem Sammler 24 zugeführt werden.

Zur Durchführung der Heizfunktion mittels des äußeren Wärmeübertragers 18 als Wärmepumpenverdampfer strömt das mittels des Kältemittelverdichters 12 verdichtete Kältemittel über das geöffnete Absperrventil A3 zur Abgabe von Wärme an einen Zuluftstrom L in das Heizregister 26. Anschließend wird es über das geöffnete Absperrventil A1 mittels des Expansionsventils AE3 in den äußeren Wärmeübertrager 18 zur Aufnahme von Wärme aus der Umgebungsluft entspannt. Danach strömt das Kältemittel über einen Wärmepumpenrückführzweig 15 zum Sammler 24 und zurück zum Kältemittelverdichter 12. Die Expansionsventile AE1, AE2 und AE4 bleiben dabei, ebenso wie das Absperrventil A5, geschlossen.

Eine indirekte Dreiecksschaltung kann dadurch realisiert werden, dass bei geöffnetem Absperrventil A1 das von dem Kältemittelverdichter 12 verdichtete Kältemittel mittels des Expansionsventils AE1 in den Chiller 28 entspannt wird, wobei gleichzeitig kühlmittelseitig, also in dem Kühlmittelkreislauf 28.2 kein Massenstrom erzeugt wird, also bspw. das als Kühlmittel verwendete Fluid, wie etwa Wasser oder Wasser-Glykol-Gemisch, auf der Kühlmittelseite des Chillers 28 stehen bleibt bzw. der Chiller 28 nicht aktiv von Kühlmittel durchströmt wird. Die Expansionsventile AE2, AE3 und AE4 bleiben bei dieser Schaltvariante geschlossen.

Bei einem Nachheiz- bzw- Reheat-Betrieb wird der in den Fahrzeuginnenraum zugeführte Zuluftstrom L mittels des Verdampfers 22 zunächst gekühlt und damit entfeuchtet. Mit der dem Kältemittel über den Verdichter 12 zugeführten Wärme kann der Zuluftstrom L mittels des Heizregisters 26 zumindest teilweise wieder erwärmt werden.

Hierzu weist die Kälteanlage 10, insbesondere das Klimagerät 32, zwischen dem Verdampfer 22 und dem Heizregister 26 einstellbare, insbesondere steuerbare und schwenkbare, Temperaturklappen 34 auf. Im dargestellten Beispiel sind eine linke und eine rechte Temperaturklappe 34L und 34R (in Figur 1 schematisch dargestellt) angeordnet. Die Temperaturklappen 34L, 34R können zwischen einer Offenposition, die als 100%-Position bezeichnet wird, und einer Schließposition, die als 0%-Position bezeichnet wird, eingestellt bzw. verschwenkt werden. Alternativ ist es auch möglich, die Temperaturklappen 34R, 34L dem Heizregister 26 nachzuschalten.

In der 100%-Position wird der gesamte den Verdampfer 22 durchströmende Zuluftstrom L über das Heizregister 26 geführt und erwärmt, bevor dieser in den Fahrgastraum des Fahrzeugs strömen kann. In der 0%-Position strömt der gesamte den Verdampfer 22 durchströmende Zuluftstrom L im Bypass um das Heizregister 26 ohne Erwärmung und damit ohne Wärmeaufnahme in den Fahrgastraum.

In einer x-Position der Temperaturklappen 34L und 34R mit 0 % < x < 100 % sind diese Temperaturklappen nur teilweise geöffnet, so dass jeweils nur ein Teilluftstrom des den Verdampfer 22 durchströmenden Zuluftstroms L über das Heizregister 26 geführt wird. Dieser erwärmte Teilluftstrom kann anschließend dem verbleibenden, gekühlten und entfeuchteten Teilluftstrom beigemischt werden. Der in dieser Weise erwärmte Zuluftstrom L wird dem Fahrgastraum des Fahrzeugs zugeführt. Beispielhaft zeigt eine 50 %-Position an, dass die Temperaturklappen 34R und 34L nur halb, also 50 % geöffnet sind.

Ein strömungstechnisch zum Verdampfer 22 parallel angeordneter Heckverdampfer 22h ist eine optionale Komponente in einer Kälteanlage 10. Der Heckverdampfer 22h dient insbesondere dazu, einen hinteren Bereich (Fond) des Kraftfahrzeugs zu klimatisieren. Der Heckverdampfer 22h kann beispielsweise beim Abzweigpunkt Ab1 angeschlossen sein. Dem Heckverdampfer 22h ist ein eigenes Expansionsventil AE5 zugeordnet, insbesondere stromaufwärts von dem Heckverdampfer 22h angeordnet. Stromabwärts des Heckverdampfers 22h kann ein weiteres Rückschlagventil R3 angeordnet sein. Schließlich ist der Heckverdampfer 22 stromabwärts des Rückschlagventils R1 mit der niederdruckseitigen Zufuhrleitung zum Kältemittelsammler verbunden.

Ein Nachheiz- bzw. Reheat-Betrieb des Kältemittelkreislaufs 11 bzw. der Kälteanlage 10 wird in Abhängigkeit der Wärmebilanz auf unterschiedliche Weise durchgeführt.

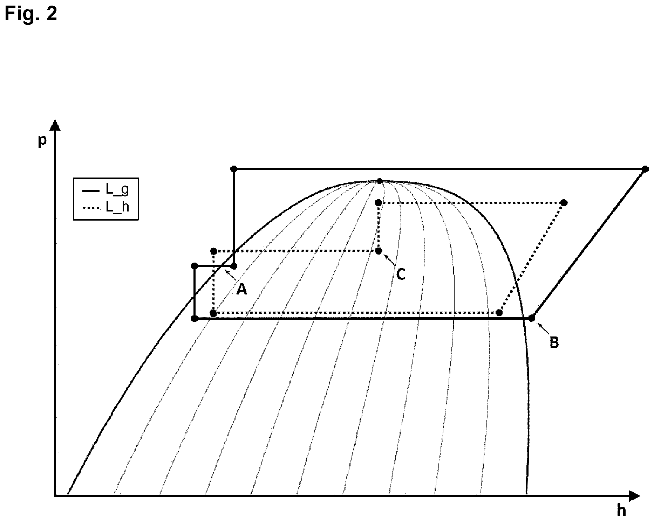

Nachfolgend wird ein für den Nachheiz- bzw. Reheatbetrieb mögliches Betriebsverfahren 500 anhand des Ablaufschemas der Fig. 2 und unter Bezugnahme auf die in Fig. 1 dargestellte Kälteanlage 10 und ihrer Komponenten beispielhaft erläutert. Ein solches Betriebsverfahren ist üblicherweise in einem Steuergerät für die Kälteanlage bzw. für die Klimatisierung in einem Fahrzeug als Steuerprogramm umgesetzt.

Betrachtet wird ein Nachheizbetrieb, bei dem das Kältemittel ausgehend von dem Verdichter 12 über das geöffnete Absperrventil A3 zum Heizregister 26 (Heizkondensator bzw. Heizgaskühler) strömt Das Absperrventil A1 ist geschlossen und das Kältemittel strömt über das Expansionsventil AE4 zum äußeren Wärmeübertrager 18. Danach passiert das Kältemittel hochdruckseitig den inneren Wärmeübertrager 20 und gelangt über das geöffnete Expansionsventil AE3 und das Expansionsventil AE2 zum Verdampfer 22. Von dort gelangt das Kältemittel über den Kältemittelsammler 24 und den niederdruckseitigen Abschnitt des inneren Wärmeübertragers 20 wieder zum Verdichter 12. Bei diesem Nachheizverfahren können die Temperaturklappen 34L, 34R in geeignete Stellungen bewegt werden, die einen Wert von 0% (Temperaturklappen 34L, 34R geschlossen) bis 100% (Temperaturklappen 34L, 34R vollständig geöffnet) annehmen können.

Fig. 2 zeigt in einem schematischen und vereinfachten log(p)-h-Diagramm rein qualitativ den Kältekreisprozess und die mit dem hier vorgestellten Nachheizverfahren verbundenen Wirkungen. Der Kreisprozess wird im Gegenuhrzeigersinn durchlaufen.

Der mit durchgezogener Linie L_g dargestellte Kreisprozess illustriert die Problematik, dass bei geringen Leistungsüberschüssen das Kältemittel im äußeren Wärmeübertrager 18 nahezu vollständig bzw. Überwiegend im zweiphasigen Aggregatszustand vorliegt. Dies ist durch den auf den isobaren Verlauf gerichteten Pfeil A gekennzeichnet. Über das Expansionsventil AE2 wird Druck abgebaut und es ist aus dem durchgezogen dargestellten Kreisprozess ersichtlich, dass sich auf der Niederdruckseite, ein Mangel an Kältemittel einstellen kann, was zu einem überhitzten Austritt von Kältemittel am Verdampfer 22 führt, was durch den Punkt B illustriert ist. Dies kann sich beispielsweise auf die luftseitige Temperatur am Verdampfer 22 auswirken, so dass hierdurch der Innenraumkomfort im Fahrzeug negativ beeinflusst wird. Mit anderen Worten ergeben sich hohe Temperaturspreizungen der Zuluft nach dem Verdampfer 22, was zu Komforteinbußen führt.

Ferner kann es, je nach Ausgestaltung der Kälteanlage 10, auch zu Öleinlagerungen im Kältemittelspeicher 24 kommen. Aufgrund des Fehlens oder einer starken Reduktion einer flüssigen Phase von Kältemittel im Kältemittelspeicher 24 kann verstärkt Öl im Kältemittelspeicher 24 zurückbleiben und wird nicht mehr dem Verdichter 12 zugeführt, was zu Schmierungsproblemen am Verdichter 12 führen kann.

Wird die Leistungsaufnahme der Kälteanlage 10 erhöht, so dass ein größerer bzw. höherer Leistungsüberschuss entsteht, was durch den gestrichelt dargestellten Kreisprozess L_h vereinfacht illustriert ist, steigt auch die am äu-ßeren Wärmeübertrager 18 abzuführende Leistung bzw. Wärme, so dass an dessen Einritt das Kältemittel zu einem deutlich größeren Anteil bzw., mit einem zunehmenden Anteil zweiphasig vorhanden ist. Dies ist in dem gestrichelten Kreisprozess bei Punkt C illustriert, der quasi durch die Lastanhebung von links nach rechts verschoben wird. Entsprechend steht auf der Niederdruckseite der Kälteanlage 10 nun ausreichend Kältemittel für den Verdampfer 22 oder/und den Chiller 28 oder/und einen Heckverdampfer zu Verfügung. Dementsprechend ist auch im Kältemittelspeicher 24 ein ausreichender Anteil an flüssigem Kältemittel enthalten, so dass die oben beschriebene Problematik der luftseitigen Temperaturinhomogenität sowie der unzureichenden Schmierung des Verdichters 12 nicht eintritt.

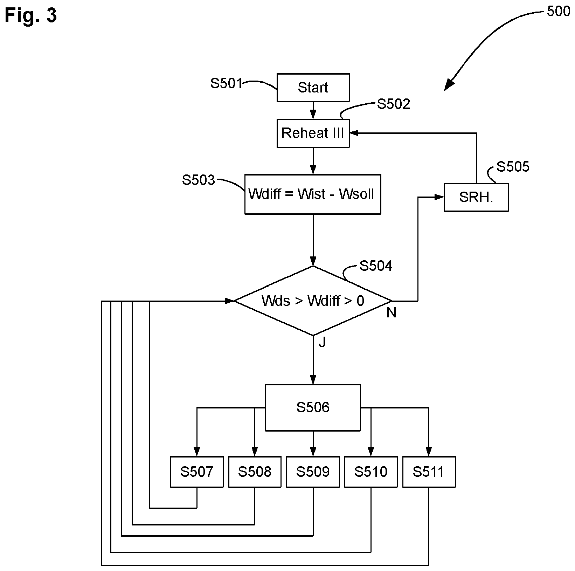

Fig. 3 zeigt vereinfacht ein Nachheizverfahren 500, bei die Kälteanlage 10 so eingestellt ist, dass der Kältemittelfluss wie oben beschrieben vom Verdichter über das Heizregister 26, das Expansionsventil AE4, den äußeren Wärmeübertrager 18, den inneren Wärmeübertrager 20, das Expansionsventil AE3, zumindest den Verdampfer 22 und schließlich zum Kältemittelspeicher 24 strömt.

Gemäß dem in Fig. 3 gezeigten Nachheizverfahren 500 erfolgt im Betrieb nach dem Start (S501) der Kälteanlage 10 zu einem hier nicht näher bezeichneten Zeitpunkt ein Übergang in einen Nachheizbetrieb, der hier mit Reheat III (S502) bezeichnet ist. Eine mögliche Bedingung, die erfüllt sein muss, um den Nachheizbetrieb (S502) zu starten, kann beispielsweise die gemessene Umgebungstemperatur sein. Das Nachheizverfahren kann insbesondere aktiviert werden, wenn die Umgebungstemperatur bis zu 15°C. beträgt, insbesondere von etwa 5°C bis 15°C beträgt.

Bei einem solchen Nachheizverfahren 500 können zum verbesserten Kältemittelmanagement folgende Schritte durchgeführt werden.

Zunächst wird in S503 ein Wärmedifferenzwert Wdiff durch Vergleichen eines Wärmeabgabe-Istwerts Wist am Heizregister 26 mit einem Wärmeabgabe-Sollwert Wsoll bestimmt, wobei Wdiff = Wist - Wsoll.

In S504 wird bestimmt, ob der in S503 bestimmte Wärmedifferenzwert Wdiff größer als Null ("0") und kleiner als ein Wärmedifferenzschwellwert Wds ist. Hierdurch wird somit bestimmt, ob ein geringer Wärme- bzw. Leistungsüberschuss vorliegt.

In S506 erfolgt ein Anpassen von wenigstens einer Betriebseinstellung der Kälteanlage 10, so dass die Lastaufnahme in der Kälteanlage 10 erhöht wird, wenn die Bedingung in S504 erfüllt ist. Ist die Bedingung in S504 nicht erfüllt, d.h. es liegt entweder ein Leistungsdefizit oder ein hoher Leistungsüberschuss vor, wird das Nachheizverfahren in einen Schritt S505 verzweigt, der stellvertretend für unter diesen Bedingungen durchzuführende Verfahrensschritte SRH steht, die aber hier nicht näher beschrieben werden.

Das Anpassen der Betriebseinstellung umfasst den Schritt S507: Messen der Temperatur der Zuluft nach dem Durchströmen des Verdampfers 22 und Absenken einer Solltemperatur SP T_Verd für die Temperatur der Zuluft zum Heizregister nach dem Durchströmen des Verdampfers 22. Das Absenken der Solltemperatur SP T_Verd kann dabei bis zum Erreichen einer minimal zulässigen Solltemperatur durchgeführt werden. Dies kann insbesondere wiederholt oder/und schrittweise durchgeführt werden.

Das Anpassen der Betriebseinstellung kann den Schritt S508 umfassen: Einstellen der Kondition oder Güte der zum Verdampfer 22 zugeführten Zuluft (L), wobei der Umluftanteil in der Zuluft erhöht wird, vorausgesetzt natürlich dessen Beimischung erwirkt die gewünschte Lastanhebung am Verdampfer durch einen Anstieg der Enthalpie im Zuluftstrom zum Verdampfer.

Das Anpassen der Betriebseinstellung kann den Schritt S509 umfassen: Einbinden von wenigstens einer weiteren, strömungstechnisch parallel oder in Sonderfällen auch in Reihe zum Verdampfer 22 angeordneten Komponente der Kälteanlage 10, insbesondere des als Wasserwärmepumpenverdampfer arbeitenden Chillers 28 oder/und des Heckverdampfers 22h für die Klimatisierung eines hinteren Fahrzeugbereichs.

Das Anpassen der Betriebseinstellung kann den Schritt S510 umfassen: Erhöhen der Luftmenge, die durch das Heizregister 22 geführt wird.

Das Anpassen der Betriebseinstellung kann den Schritt S511 umfassen: Verringerung des Zuluftstroms über den äußeren Wärmeübertrager 18. Der äu-ßere Wärmeübertrager 18 kann auch als Kühlpaket mit den integrierten Komponenten Kondensator 18 oder Gaskühler 18 bezeichnet werden. Die Verringerung des Zuluftstroms kann per verschließbarem oder/und stufenlos verstellbarem Kühllufteintritt und/oder Reduktion der Lüfteransteuerung erfolgen, was zur Verringerung der angesaugten Luftmenge aus der Umgebung führt.

Die Schritte S507 bis S511 können einzeln oder in an sich beliebigen Kombinationen miteinander kombiniert werden, um das gewünschte Ergebnis einer gesteigerten Leistungsaufnahme zu erreichen. Wird durch gegebenenfalls mehrfaches Ausführen von einem der Schritte S507 bis S511 bzw. einer Kombination von mehreren dieser Schritte S507 bis S511 das gewünschte Ergebnis des gesteigerten Leistungsüberschusses erreicht, ist die Bedingung in Schritt S504 nicht mehr erfüllt, so dass das Nachheizverfahren 500 in den Schritt S505 verzweigt, der stellvertretend für einen Zustand der Kälteanlage 10 steht, in dem die Gefahr eines Kältemittelmangels, insbesondere in flüssigem Aggregatszustand, auf der Niederdruckseite bzw. im Kältemittelsammler 24 nicht vorliegt und beim Nachheizverfahren 500 insbesondere die Schritte S507 bis S511 nicht durchlaufen werden müssen.

## Patentansprüche

1. Nachheizverfahren (500) zum Betreiben einer Kälteanlage (10) mit Wärmepumpenfunktion für ein Kraftfahrzeug, wobei die Kälteanlage (10) umfasst:
einen Kältemittelverdichter (12), der mit einem Primärstrang (14) und einem Sekundärstrang (16) verbindbar oder verbunden ist;
einen äußeren Wärmeübertrager (18), der im Primärstrang (14) angeordnet ist;
einen Verdampfer (22), der im Primärstrang (14) angeordnet ist;
ein Heizregister (26), das im Sekundärstrang (16) angeordnet ist;
wenigstens ein Nachheiz-Expansionsventil (AE4), das zwischen dem Heizregister (26) und dem äußeren Wärmeübertrager (18) im Sekundärstrang (16) angeordnet ist;
wobei in dem Nachheizverfahren (500) das Kältemittel ausgehend vom Kältemittelverdichter (12) nacheinander die folgenden Komponenten der Kälteanlage (10) durchströmt: Heizregister (26) und Nachheiz-Expansionsventil (AE4) im Sekundärstrang, äußerer Wärmeübertrager (18) und
Verdampfer (22) im Primärstrang (14),
wobei das Nachheizverfahren folgende Schritte umfasst:
Bestimmen (S503) eines Wärmedifferenzwerts (Wdiff) durch Vergleichen eines Wärmeabgabe-Istwerts (Wist) am Heizregister (26) mit einem Wärmeabgabe-Sollwert (Wsoll),
**gekennzeichnet durch**
ein Anpassen (S506) von wenigstens einer Betriebseinstellung der Kälteanlage (10), so dass die Lastaufnahme in der Kälteanlage (10) erhöht wird, wenn der Wärmedifferenzwert (Wdiff) größer als 0 und kleiner als ein Wärmedifferenzschwellwert (Wds) ist,
wobei das Anpassen der Betriebseinstellung umfasst: Messen (S507) der Temperatur der Zuluft nach dem Durchströmen des Verdampfers (22) und Absenken einer Solltemperatur (SP T_Verd) für die Temperatur der Zuluft nach dem Durchströmen des Verdampfers (22).

2. Nachheizverfahren nach Anspruch 1, wobei das Absenken (S507) der Solltemperatur (SP T_Verd) bis zum Erreichen einer minimalen Solltemperatur durchgeführt wird, insbesondere wiederholt oder/und schrittweise durchgeführt wird.

3. Nachheizverfahren nach Anspruch 1 oder 2, wobei das Anpassen der Betriebseinstellung umfasst: Einstellen (S508) der Kondition oder Güte der zum Verdampfer zugeführten Zuluft, wobei der Umluftanteil in der Zuluft erhöht wird.

4. Nachheizverfahren nach einem der vorhergehenden Ansprüche, wobei das Anpassen der Betriebseinstellung umfasst: Einbinden (S509) von wenigstens einer weiteren, strömungstechnisch parallel oder in Reihe zum Verdampfer (22) angeordneten Komponente der Kälteanlage (10), insbesondere eines als Wasserwärmepumpenverdampfer arbeitenden Chillers (28) oder/und eines Heckverdampfers (22h) für die Klimatisierung eines hinteren Fahrzeugbereichs.

5. Nachheizverfahren nach einem der vorhergehenden Ansprüche, wobei das Anpassen der Betriebseinstellung umfasst: Erhöhen (S510) der Luftmenge, die durch das Heizregister (26) geführt wird.

6. Nachheizverfahren nach einem der vorhergehenden Ansprüche, wobei das Anpassen der Betriebseinstellung umfasst: Verringern (S511) des Zuluftstroms über den äußeren Wärmeübertrager (18).

7. Kälteanlage (10) mit Wärmepumpenfunktion für ein Kraftfahrzeug, mit
einem Kältemittelverdichter (12), der mit einem Primärstrang (14) und einem Sekundärstrang (16) verbindbar oder verbunden ist;
einem äußeren Wärmeübertrager (18), der im Primärstrang (14) angeordnet ist;
einem Verdampfer (22), der im Primärstrang (14) angeordnet ist;
einem Heizregister (26), das im Sekundärstrang (16) angeordnet ist;
wenigstens einem Nachheiz-Expansionsventil (AE4), das zwischen dem Heizregister (26) und dem äußeren Wärmeübertrager (18) im Sekundärstrang (16) angeordnet ist; und
einem Steuergerät, das dazu eingerichtet ist, die Kälteanlage (10) mit einem Nachheizverfahren (500) nach einem der vorhergehenden Ansprüche zu betrieben,
wobei in einem solchen Nachheizbetrieb (500) das Kältemittel ausgehend vom Kältemittelverdichter (12) nacheinander die folgenden Komponenten der Kälteanlage (10) durchströmt: Heizregister (26) und Nachheiz-Expansionsventil (AE4) im Sekundärstrang, äußerer Wärmeübertrager (18) und Verdampfer (22) im Primärstrang (14).

8. Kälteanlage (10) nach Anspruch 7, mit einem strömungstechnisch paral-lel zum Verdampfer (22) angeordneten Chiller oder/und einem strömungstechnisch parallel zum Verdampfer (22) angeordneten Heckverdampfer (22h).

9. Kälteanlage nach Anspruch 7 oder 8, mit wenigstens einer beweglichen Temperaturklappe (34L, 34R), die bezogen auf eine Zuluftströmungsrichtung (L) vor oder nach dem Heizregister (26) angeordnet ist.

10. Kälteanlage nach einem der Ansprüche 7 bis 9, mit wenigstens einer beweglichen Zuluftklappe, die bezogen auf eine Zuluftströmungsrichtung (L) vor dem Verdampfer angeordnet ist.

11. Kraftfahrzeug mit einer Kälteanlage (10) nach einem der Ansprüche 7 bis 10.

## Claims

1. Reheating method (500) for operating a refrigeration system (10) with a heat pump function for a motor vehicle, wherein the refrigeration system (10) comprises:
a refrigerant compressor (12) which can be connected or is connected to a primary line (14) and a secondary line (16);
an external heat exchanger (18) which is arranged in the primary line (14);
an evaporator (22) which is arranged in the primary line (14);
a heating register (26) which is arranged in the secondary line (16);
at least one reheating expansion valve (AE4), which is arranged between the heating register (26) and the external heat exchanger (18) in the secondary line (16);
wherein in the reheating method (500) the refrigerant, starting from the refrigerant compressor (12) flows through the following components in the refrigeration system (10) one after another: heating register (26) and reheating expansion valve (AE4) in the secondary line, external heat exchanger (18) and evaporator (22) in the primary line (14),
wherein the reheating method comprises the following steps:
determining (S503) a heat differential value (Wdiff) by comparing a heat emission actual value (Wist) at the heating register (26) to a heat emission target value (Wsoll), **characterized by** an adjusting (S506) of at least one operating setting of the refrigeration system (10), so that the load capacity in the refrigeration system (10) is increased if the heat differential value (Wdiff) is greater than 0 and less than a heat differential threshold value (Wds),
wherein the adjusting of the operating setting comprises: measuring (S507) the temperature of the supply air after flowing through the evaporator (22) and reducing a target temperature (SP T_Verd) for the temperature of the supply air after flowing through the evaporator (22).

2. Reheating method according to claim 1, wherein the reduction (S507) of the target temperature (SP T_Verd) is carried out until reaching a minimal target temperature, in particular is carried out repeatedly and/or step-by-step.

3. Reheating method according to claim 1 or 2, wherein the adjusting of the operating setting comprises: setting (S508) the condition or quality of the supply air supplied to the evaporator, wherein the recirculated air component in the supply air is increased.

4. Reheating method according to any one of the preceding claims, wherein the adjusting of the operating setting comprises: incorporating (S509) at least one further component of the refrigeration system (10), which is arranged fluidically in parallel or in series with the evaporator (22), in particular a chiller (28) operating as a water heat pump evaporator and/or a rear evaporator (22h) for the climate control of a rear vehicle region.

5. Reheating method according to any one of the preceding claims, wherein the adjusting of the operating setting comprises: increasing (S510) the amount of air which is guided through the heating register (26).

6. Reheating method according to any one of the preceding claims, wherein the adjusting of the operating setting comprises: reducing (S511) the supply air flow via the external heat exchanger (18).

7. Refrigeration system (10) with a heat pump function for a motor vehicle, with a refrigerant compressor (12), whichcan be connected or is connected to a primary line (14) and a secondary line (16);
an external heat exchanger (18) which is arranged in the primary line (14);
an evaporator (22) which is arranged in the primary line (14);
a heating register (26) which is arranged in the secondary line (16);
at least one reheating expansion valve (AE4), which is arranged between the heating register (26) and the external heat exchanger (18) in the secondary line (16); and
a control device which is configured to operate the refrigeration system (10) in a reheating method (500) according to any one of the preceding claims,
wherein in a reheating operation (500) of this sort, the refrigerant, starting from the refrigerant compressor (12) flows through the following components in the refrigeration system (10) one after another: heating register (26) and reheating expansion valve (AE4) in the secondary line, external heat exchanger (18) and evaporator (22) in the primary line (14),

8. Refrigeration system (10) according to claim 7, with a chiller arranged fluidically in parallel with the evaporator (22) and/or a rear evaporator (22h) arranged fluidically in parallel with the evaporator (22).

9. Refrigeration system according to claim 7 or 8, with at least one movable temperature flap (34L, 34R), which is arranged in front of or behind the heating register (26) in relation to a supply air flow direction (L);

10. Refrigeration system according to any one of claims 7 to 9, with at least one movable supply air valve, which is arranged in front of the evaporator in relation to a supply air flow direction (L).

11. Motor vehicle with a refrigeration system (10) according to any one of claims 7 to 10.

## Revendications

1. Procédé de réchauffage (500) pour faire fonctionner une installation de réfrigération (10) avec fonction de pompe à chaleur pour un véhicule à moteur, dans lequel l'installation de réfrigération (10) comprend :
un compresseur de réfrigérant (12) qui peut être connecté ou est connecté à une branche primaire (14) et à une branche secondaire (16) ;
un échangeur de chaleur extérieur (18) qui est disposé dans la branche primaire (14) ;
un évaporateur (22) qui est disposé dans la branche primaire (14) ;
un registre de chauffage (26) qui est disposé dans la branche secondaire (16) ;
au moins un robinet détendeur de réchauffage (AE4) qui est disposé entre le registre de chauffage (26) et l'échangeur de chaleur extérieur (18) dans la branche secondaire (16) ;
dans lequel, dans le procédé de réchauffage (500), le réfrigérant émanant du compresseur de réfrigérant (12) traverse consécutivement les composants suivants de l'installation de réfrigération (10) : registre de chauffage (26) et robinet détendeur de réchauffage (AE4) dans la branche secondaire, échangeur de chaleur extérieur (18) et évaporateur (22) dans la branche primaire (14),
dans lequel le procédé de réchauffage comprend les étapes suivantes :
détermination (S503) d'une valeur de différence thermique (Wdiff) en comparant une valeur réelle de dégagement de chaleur (Wist) au niveau du registre de chauffage (26) à une valeur de consigne de dégagement de chaleur (Wsoll), **caractérisé par** un ajustement (S506) d'au moins un réglage de fonctionnement de l'installation de réfrigération (10), de sorte que la prise de charge dans l'installation de réfrigération (10) soit augmentée lorsque la valeur de différence thermique (Wdiff) est supérieure à 0 et inférieure à une valeur seuil de différence thermique (Wds),
dans lequel l'ajustement du réglage de fonctionnement comprend : la mesure (S507) de la température de l'air d'alimentation après avoir traversé l'évaporateur (22) et l'abaissement d'une température de consigne (SP T_Verd) pour la température de l'air d'alimentation après avoir traversé l'évaporateur (22).

2. Procédé de réchauffage selon la revendication 1, dans lequel l'abaissement (S507) de la température de consigne (SP T_Verd) est effectué jusqu'à atteindre une température de consigne minimale, en particulier de manière répétée et/ou par étapes.

3. Procédé de réchauffage selon la revendication 1 ou 2, dans lequel l'adaptation du réglage de fonctionnement comprend : le réglage (S508) de la condition ou de la qualité de l'air d'alimentation amené à l'évaporateur, dans lequel la part d'air recyclé dans l'air d'alimentation est augmentée.

4. Procédé de réchauffage selon l'une quelconque des revendications précédentes, dans lequel l'adaptation du réglage de fonctionnement comprend : l'intégration (S509) d'au moins un composant supplémentaire de l'installation de réfrigération (10) disposé fluidiquement en parallèle ou en série par rapport à l'évaporateur (22), en particulier d'un refroidisseur (28) fonctionnant en tant qu'évaporateur de pompe à chaleur à eau et/ou d'un évaporateur arrière (22h) pour la climatisation d'une zone de véhicule arrière.

5. Procédé de réchauffage selon l'une quelconque des revendications précédentes, dans lequel l'adaptation du réglage de fonctionnement comprend : l'augmentation (S510) de la quantité d'air qui est guidée à travers le registre de chauffage (26).

6. Procédé de réchauffage selon l'une quelconque des revendications précédentes, dans lequel l'adaptation du réglage de fonctionnement comprend : la diminution (S511) du débit d'air d'alimentation par l'intermédiaire de l'échangeur de chaleur extérieur (18).

7. Installation de réfrigération (10) avec fonction de pompe à chaleur pour un véhicule à moteur, avec un compresseur de réfrigérant (12) qui peut être connecté ou est connecté à une branche primaire (14) et à une branche secondaire (16) ;
un échangeur de chaleur extérieur (18) qui est disposé dans la branche primaire (14) ;
un évaporateur (22) qui est disposé dans la branche primaire (14) ;
un registre de chauffage (26) qui est disposé dans la branche secondaire (16) ;
au moins un robinet détendeur de réchauffage (AE4) qui est disposé entre le registre de chauffage (26) et l'échangeur de chaleur extérieur (18) dans la branche secondaire (16) ; et
un dispositif de commande qui est configuré pour faire fonctionner l'installation de réfrigération (10) avec un procédé de réchauffage (500) selon l'une quelconque des revendications précédentes,
dans lequel, dans un tel mode de réchauffage (500), le réfrigérant émanant du compresseur de réfrigérant (12) traverse consécutivement les composants suivants de l'installation de réfrigération (10) : registre de chauffage (26) et robinet détendeur de réchauffage (AE4) dans la branche secondaire, échangeur de chaleur extérieur (18) et évaporateur (22) dans la branche primaire (14),

8. Installation de réfrigération (10) selon la revendication 7 avec un refroidisseur disposé fluidiquement en parallèle par rapport à l'évaporateur (22) et/ou un évaporateur arrière (22h) disposé fluidiquement en parallèle par rapport à l'évaporateur (22).

9. Installation de réfrigération selon la revendication 7 ou 8 avec au moins un volet de température mobile (34L, 34R) qui est disposé devant ou derrière le registre de chauffage (26) par rapport à une direction d'écoulement d'air d'alimentation (L).

10. Installation de réfrigération selon l'une quelconque des revendications 7 à 9 avec au moins un volet d'air d'alimentation mobile qui est disposé en amont de l'évaporateur par rapport à une direction d'écoulement d'air d'alimentation (L).

11. Véhicule à moteur avec une installation de réfrigération (10) selon l'une quelconque des revendications 7 à 10.
